# EUROPÄISCHE PATENTSCHRIFT

(11) **EP 2 194 301 B1**
(45) Veröffentlichungstag und Bekanntmachung des Hinweises auf die Patenterteilung: **05.03.2014**
(21) Anmeldenummer: 09013833.0
(22) Anmeldetag: 04.11.2009
(51) Int. Cl.: F16K 31/06

(54) **Servoventil eines Gasregelgeräts**
Servo valve for a gas regulating device
Servosoupape d'un appareil de réglage du gaz

(30) Priorität: 05.12.2008 DE 102008060483
(43) Veröffentlichungstag der Anmeldung: 09.06.2010
(73) Patentinhaber: Honeywell Technologies Sarl, 1180 Rolle (CH)
(72) Erfinder: Baarda, Gerrit Jan, 7827 RE Emmen (NL)
(74) Vertreter: Sturm, Christoph

(56) Entgegenhaltungen:
- EP-A2- 1 992 856
- WO-A2-2005/096695
- DE-A1-102004 021 528
- US-A- 3 589 391

## Beschreibung

Die Erfindung betrifft ein Servoventil eines Gasregelgeräts nach dem Oberbegriff des Anspruchs 1.

Aus der Praxis bekannte Servoventile von Gasregelgeräten verfügen über einen Ventilkörper, einen Ventilsitz und ein Federelement, wobei die vom Federelement bereitgestellte Federkraft den Ventilkörper in eine Schließstellung gegen den Ventilsitz drückt. Weiterhin verfügen aus der Praxis bekannte Servoventile über einen als Elektromagneten ausgebildeten Aktuator, der in einem bestromten Zustand den Ventilkörper entgegen der vom Federelement bereitgestellten Federkraft vom Ventilsitz abhebt und in eine Öffnungsstellung überführt.

Aus der DE 103 16 098 A1 ist ein als Doppel-Servoventil ausgebildetes Servoventil für ein Gasregelgerät bekannt, welches zwei Ventilkörper, zwei Ventilsitze und einen Elektromagneten umfasst, wobei zu einer Seite des Elektromagneten ein erster Ventilsitz und ein erster Ventilkörper und zu einer zweiten, gegenüberliegenden Seite des Elektromagneten ein zweiter Ventilsitz und ein zweiter Ventilkörper positioniert sind. Mit einem einzigen Elektromagneten können beide Ventilkörper vom jeweiligen Ventilsitz abgehoben werden, und zwar jeweils entgegen einer von einem Federelement bereitgestellten Federkraft, die den jeweiligen Ventilkörper gegen den jeweiligen Ventilsitz und damit in eine Schließstellung drückt. Weiterer Stand der Technik ist aus der WO 2005/096695 A2, der US 3 589 391 A und der DE 10 2004 021528 A1 bekannt.

Bislang bekannte Servoventile benötigen, unabhängig davon, ob dieselben als Einzel-Servoventil oder gemäß der DE 103 16 098 A1 als Doppel-Servoventile ausgebildet sind, einen relativ großen Bauraum. Des Weiteren benötigen bislang bekannte Servoventile viel elektrische Energie. Dies ist von Nachteil.

Der Erfindung liegt die Aufgabe zu Grunde, ein neuartiges Servoventil eines Gasregelgeräts zu schaffen, welches eine kompakte Bauform aufweist und nur einen geringen Bedarf an elektrischer Energie bzw. Leistung hat. Diese Aufgabe wird durch ein Servoventil eines Gasregelgeräts mit den Merkmalen des Anspruchs 1 gelöst.

Mit der hier vorliegenden Erfindung kann ein Servoventil kompakter und demnach mit geringerem Bauraum ausgeführt werden. Die mittlere Öffnung des Elektromagneten ist von Gas durchströmt, ohne dass jedoch Spulenwicklungen des Elektromagneten von Gas durchströmt sind. Es ist so möglich, das gesamte Servoventil in einem Gehäuse eines Gasregelgeräts zu positionieren und kleine Luftspalte zu nutzen, wodurch der Bedarf an elektrischer Energie bzw. Leistung des Elektromagneten gesenkt werden kann. Das erfindungsgemäße Servoventil kann daher im Hinblick auf Sicherheitsanforderungen einfacher in ein Gasregelgerät implementiert werden.

Bevorzugte Weiterbildungen der Erfindung ergeben sich aus den Unteransprüchen und der nachfolgenden Beschreibung. Nachfolgend werden Ausführungsbeispiele der Erfindung, ohne hierauf beschränkt zu sein, anhand der Zeichnung näher erläutert. In der Zeichnung zeigt:
- Fig. 1:: eine schematisierte Darstellung eines nicht erfindungsgemäßen Servoventils eines Gasregelgeräts nach einem ersten Ausführungsbeispiel der Erfindung zusammen mit einem Ersatzschaltbild;
- Fig. 2:: eine schematisierte Darstellung eines erfindungsgemäßen Servoventils eines Gasregelgeräts nach einem zweiten Ausführungsbeispiel der Erfindung zusammen mit einem Ersatzschaltbild;
- Fig. 3:: eine schematisierte Darstellung eines nicht erfindungsgemäßen Servoventils eines Gasregelgeräts nach einem dritten Ausführungsbeispiel der Erfindung zusammen mit einem Ersatzschaltbild; und
- Fig.4:: eine schematisierte Darstellung eines nicht erfindungsgemäßen Servoventils eines Gasregelgeräts nach einem vierten Ausführungsbeispiel der Erfindung zusammen mit einem Ersatzschaltbild.

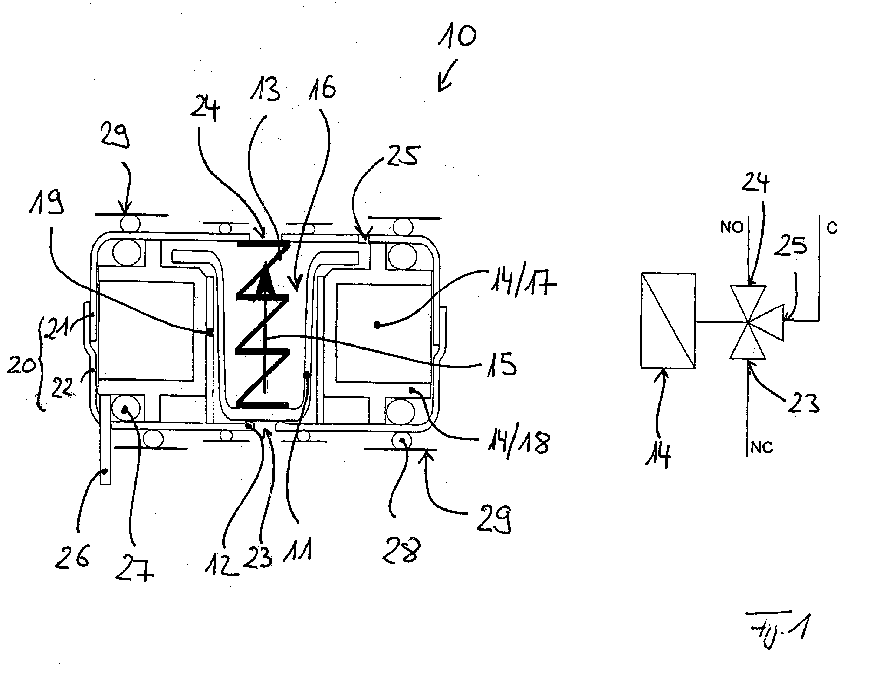

Fig. 1 zeigt ein als Einzel-Servoventil ausgeführtes Servoventil 10, welches einen Ventilkörper 11, einen Ventilsitz 12, ein Federelement 13 und einen als Elektromagneten ausgebildeten Aktuator 14 umfasst. Das Federelement 13 stellt eine Federkraft bereit und drückt infolge der Federkraft, den Ventilkörper 11 gegen den Ventilsitz 12 in eine Schließstellung. Dann, wenn der als Elektromagnet ausgebildete Aktuator 14 bestromt ist, kann der Ventilkörper 11 in Richtung des Pfeils 15 entgegen der vom Federelement 13 bereit gestellten Federkraft vom Ventilsitz 12 abgehoben werden.

Der Elektromagnet 14 ist ringförmig ausgebildet, wobei derselbe eine mittlere Öffnung 16 umfasst. Der Ventilkörper 11 und das Federelement 13 sind zumindest abschnittsweise in der mittleren Öffnung 16 des Elektromagneten 14 positioniert bzw. ragen in diese mittlere Öffnung 16 des Elektromagneten 14 hinein. Die mittlere Öffnung 16 des Elektromagneten 14 ist demnach von Gas durchströmt.

In Fig. 1 ist der Ventilsitz 12, der mit dem Ventilkörper 11 zusammenwirkt, außerhalb des Bereichs der mittleren Öffnung 16 des Elektromagneten 14 positioniert. In der in Fig. 1 gezeigten Position des Ventilkörpers 11, in welcher derselbe gegen den Ventilsitz 12 gedrückt ist, durchdringt demnach der Ventilkörper 11 die mittlere Öffnung 16 des Elektromagneten 14 vollständig.

Der als Elektromagnet 14 ausgebildete Aktuator verfügt über Spulenwicklungen 17, wobei die Spulenwicklungen 17 des Elektromagneten 14 im Bereich der von Gas durchströmten Öffnung 16 von einem gasdichten Spulenkasten 18 begrenzt und gegenüber der Öffnung 16 gasdicht getrennt sind. Die Spulenwicklungen 17 des Elektromagneten 14 sind demnach von Gas nicht durchströmt.

Der Spulenkasten 18 ist dabei vorzugsweise aus einem Kunststoff und demnach aus einem nicht magnetischen Werkstoff gefertigt.

Im Bereich der mittleren Bohrung 16 des Elektromagneten 14 erstreckt sich eine Hülse 19 aus einem weichmagnetischen Werkstoff, wobei sich die Hülse 19 radial innen unmittelbar an den Spulenkasten 18 des Elektromagneten 14 anschließt. Der Ventilkörper 11 ist demnach radial außen zumindest abschnittsweise von der Hülse 19 umgeben. Die Hülse 19 ist aus einem weichmagnetischen, vorzugsweise nicht rostenden Werkstoff gefertigt.

Ferner ist auch der Ventilkörper 11 des in Fig. 1 gezeigten Servoventils 10 vorzugsweise aus einem weichmagnetischen, nicht rostenden Werkstoff gefertigt.

Das in Fig. 1 gezeigte Servoventil 10 ist gemäß Fig. 1 von einem Gehäuse 20 umgeben, wobei das Gehäuse 20 gemäß Fig. 1 ein Gehäuseoberteil 21 und ein Gehäuseunterteil 22 umfasst, die ebenfalls aus einem weichmagnetischen Werkstoff gebildet sind. Das Gehäuseunterteil 22 bildet dabei gemäß Fig. 1 auch den Ventilsitz 12 für den Ventilkörper 11.

Das in Fig. 1 dargestellte Servoventil 10 ist als Drei-Wege-Ventil ausgeführt und verfügt demnach über Gasdurchtrittsöffnungen für die Anschlüsse "Normally Open" NO, "Normally Closed" NC und "Common" C eines Drei-Wege-Ventils. Im Ausführungsbeispiel der Fig. 1 ist die vom Ventilsitz 12 begrenzte und demnach vom Gehäuseunterteil 22 bereitgestellte Gasdurchtrittsöffnung 23 dem Anschluss "Normally Closed" NC zugeordnet. Von dem Gehäuseoberteil 21 ausgebildete Gasdurchtrittsöffnungen 24 und 25 sind hingegen den Anschlüssen "Normally Open" NO und "Common" C des Drei-Wege-Ventils zugeordnet, nämlich die Gasdurchtrittsöffnung 24 dem Anschluss "Normally Open" NO und die Gasdurchtrittsöffnung 25 dem Anschluss "Common" C des Drei-Wege-Ventils.

Der Elektromagnet 15 des Servoventils 10 der Fig. 1, nämlich die Spulenwicklungen 17 desselben, können über einen elektrischen Anschluss 26 bestromt werden. Über eine Dichtung 27 wird gewährleistet, dass der elektrische Anschluss 26 vom Gas abgedichtet und demnach getrennt ist. Dichtungen 28 dichten das Gehäuse 20 des Servoventils 10 gegenüber einem Gehäuse 29 eines Gasregelgeräts ab.

Zur Bereitstellung eines Servoventils 10, welches in Fig. 1 als Einzel-Servoventil ausgeführt ist, wird der Elektromagnet 14 ringförmig ausgebildet und in der mittleren Öffnung 16 desselben zumindest der Ventilkörper 11 und das mit dem Ventilkörper 11 zusammenwirkende Federelement 13 zumindest abschnittsweise platziert.

Diese mittlere Öffnung 16 des Elektromagneten 14 ist von Gas durchströmt, und zwar derart, dass die Spulenwicklungen 17 des Elektromagneten 14 sowie ein elektrischer Anschluss 26 derselben von der Gasströmung durch die mittlere Öffnung 16 gasdicht getrennt sind. Es ist so möglich, das gesamte Servoventil in einem Gehäuse 29 eines Gasregelgeräts zu positionieren und kleine Luftspalte zu nutzen, wodurch der Bedarf an elektrischer Energie bzw. Leistung des Elektromagneten 14 gesenkt werden kann. Das Servoventil kann daher im Hinblick auf Sicherheitsanforderungen einfacher in ein Gasregelgerät implementiert werden.

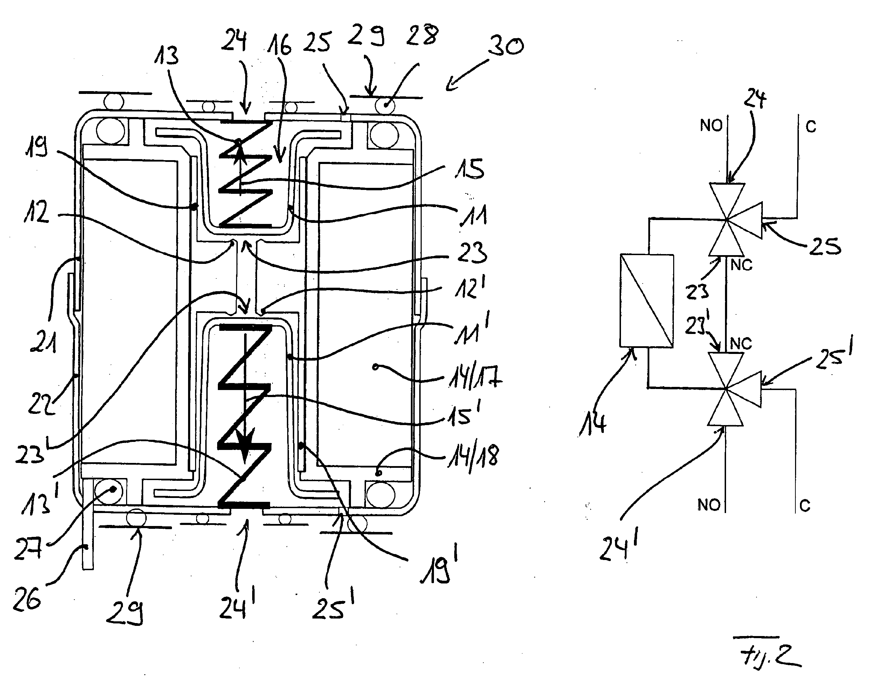

Fig. 2 zeigt ein Ausführungsbeispiel eines erfindungsgemäßen Servoventils 30, welches gemäß Fig. 2 als Doppel-Servoventil ausgeführt ist. Das Servoventil 30 der Fig. 2 verfügt demzufolge über zwei Ventilkörper 11, 11', zwei Ventilsitze 12, 12' sowie zwei Federelement 13, 13', wobei die Federelement 13, 13' jeweils eine Federkraft bereitstellen, die den jeweiligen Ventilkörper 11 bzw. 11' gegen den jeweiligen Ventilsitz 12 bzw. 12' und damit in eine Schließstellung drücken. Der als Elektromagnet 14 ausgebildete Aktuator dient dabei der Betätigung beider Ventilkörper 11 und 11', um dieselben in einem bestromten Zustand vom jeweiligen Ventilsitz 12 bzw. 12' entgegen der vom jeweiligen Federelement 13 bzw. 13' bereitgestellten Federkraft abzuheben.

In Fig. 2 sind die Ventilkörper 11 und 11' sowie die Federelemente 13 und 13' jeweils zumindest abschnittsweise innerhalb der mittleren Öffnung 16 des Elektromagneten 14 positioniert bzw. ragen in dieselbe hinein. So ragen gemäß Fig. 2 der Ventilkörper 11 und das Federelement 13 des in Fig. 2 oberen Ventils des Doppel-Servoventils 30 von oben in die mittlere Öffnung 16 des Elektromagneten 14 hinein. Der Ventilkörper 11' sowie das Federelement 13' des in Fig. 2 unteren Ventils des Doppel-Servoventils 30 ragen von unten in die mittlere Öffnung 16 und damit von einem entgegen gesetzten Ende in die mittlere Öffnung 16 des Elektromagneten 14 hinein. Dabei sind die Ventilsitze 12 uns 12' beide innerhalb der mittleren Bohrung 16 des Elektromagneten 14 positioniert.

Gemäß Fig. 2 sind beide, von unterschiedlichen Seiten aus in die Öffnung 16 hineinragende Ventilkörper 11 und 11' des Doppel-Servoventils 30 zumindest abschnittsweise von einer Hülse 19 bzw. 19' aus weichmagnetischem Werkstoff umgeben, wobei sich die Hülsen 19 und 19' in Übereinstimmung zum Ausführungsbeispiel der Fig. 1 wiederum unmittelbar radial innen an den nicht magnetischen Spulenkasten 18 des Elektromagneten 14 anschließen.

Im Ausführungsbeispiel der Fig. 2 sind die Ventilkörper 11 und 11' beider Ventile des Doppel-Servoventils 30 aus einem weichmagnetischen Werkstoff gefertigt. Beide Ventile sind als Drei-Wege-Ventile ausgeführt. Beide Ventile verfügen demnach über entsprechende Gasdurchtrittsöffnungen 23, 23' und 24, 24' sowie 25, 25' für die Anschlüsse "Normally Open" NO, "Normally Closed" NC und "Common" C, wobei sich die Verschaltung derselben unmittelbar aus dem Ersatzschaltbild der Fig. 2 ergibt.

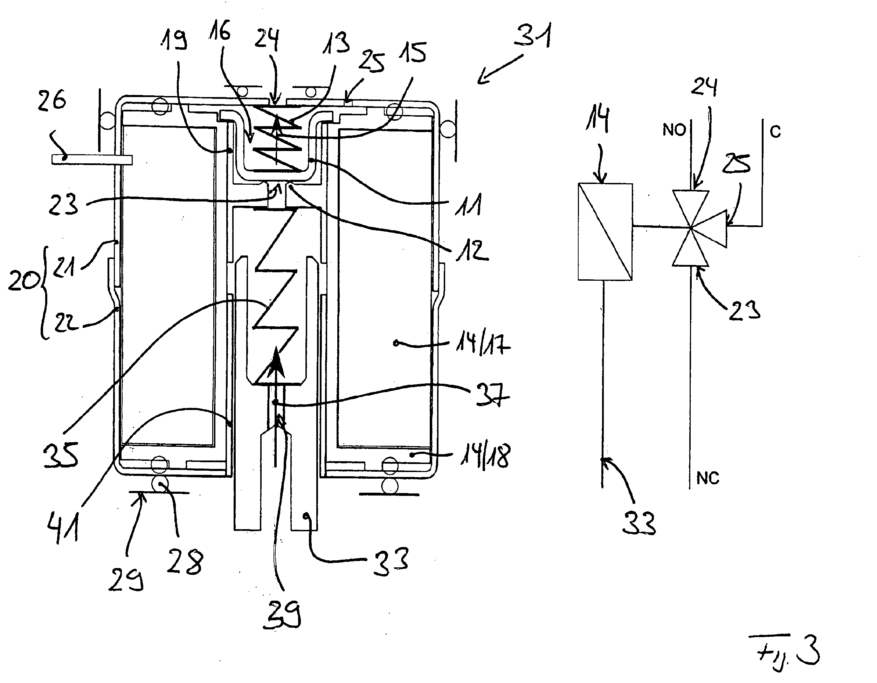

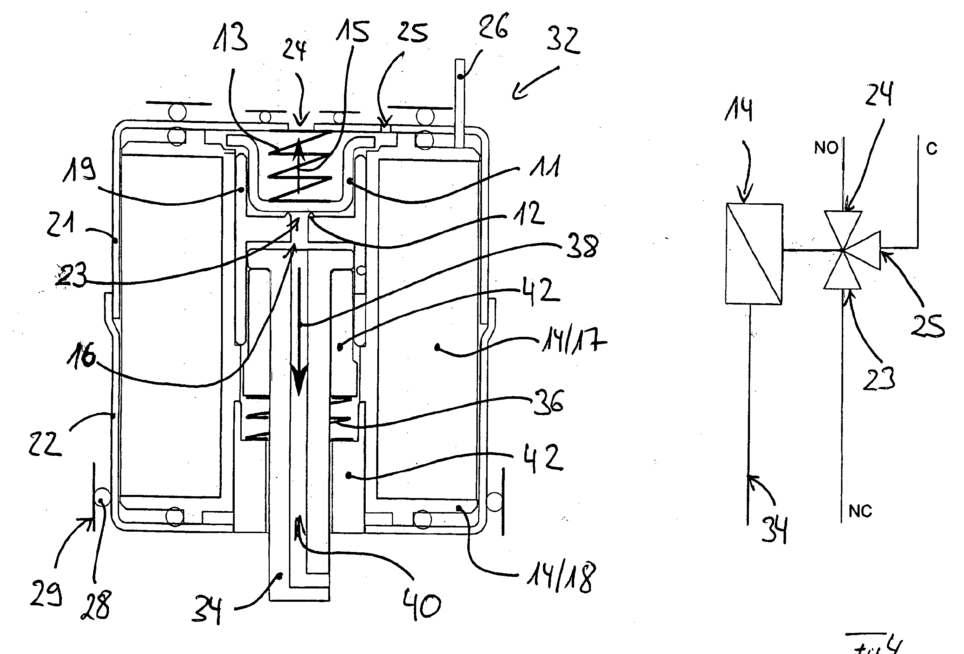

Weitere als Einzel-Servoventile ausgebildete, nicht erfindungsgemäße Servoventile 31 und 32 zeigen Fig. 3 und 4, wobei in Fig. 3 und 4 die Einzel-Servoventile 31 und 32 zusätzlich zum Ventilkörper 11, Ventilsitz 12, Federelement 13 und Elektromagneten 14 ein Betätigungselement 33 bzw. 34 für ein nicht-gezeigtes Gasregelventil umfassen. Die Betätigungselemente 33 und 34 sind dabei gemäß Fig. 3 und 4 als Betätigungskolben ausgeführt, die zumindest abschnittsweise in die mittlere Öffnung 16 des Elektromagneten 14 hineinragen, und zwar von einer entgegen gesetzten Seite wie die Ventilkörper 11 der Einzel-Servoventile 31 und 32.

Den Betätigungselementen 33 und 34 ist dabei jeweils ein Federelement 35 bzw. 36 zugeordnet, welches wiederum innerhalb der Bohrung 16 des Elektromagneten 14 zumindest abschnittsweise positioniert ist. Die Federelemente 35 bzw. 36 können auch vollständig außerhalb der Bohrung 16 des Elektromagneten 14 positioniert sein.

Das jeweilige Federelement 35 bzw. 36 rückt das jeweilige Betätigungselement 33 bzw. 34 in eine Ausgangsstellung, aus der dasselbe bei bestromtem Elektromagneten 14 entgegen der Federkraft des jeweiligen Federelements 35 bzw. 36 verlagert wird.

Die Fig. 3 und 4 unterscheiden sich dabei durch die Verlagerungsrichtungen der Betätigungselemente 33 und 34 bei bestromtem Elektromagneten 14, wobei die entsprechenden Verlagerungsrichtungen für die Betätigungselemente 33 und 34 bei bestromtem Elektromagneten 14 in Fig. 3 und 4 durch entsprechende Pfeile 37 und 38 dargestellt sind. Gemäß Fig. 3 und 4 ist dem jeweiligen Betätigungselement 33 bzw. 34 jeweils ein Strömungskanal 39 bzw. 40 für Gas zugeordnet, die Betätigungselemente 33, 34 der Servoventile 31, 32 der Fig. 3 und 4 sind demnach von Gas durchströmt.

Ebenso wie die Ventilkörper 11 der Einzel-Servoventile 31, 32 sind gemäß Fig. 3 und 4 auch die Betätigungselemente 33 und 34 derselben abschnittsweise von einer Hülse 41 bzw. 42 aus weichmagnetischem Material umgeben, die sich jeweils radial innen an den Spulenkasten 18 des jeweiligen Elektromagneten 14 anschließt. Dabei ist in Fig. 4 die Hülse 42 zweiteilig ausgeführt. Die Betätigungselemente 33 und 34 sind vorzugsweise aus einem weichmagnetischen Material gefertigt.

Spulenwicklungen 17 des Elektromagneten 14 sind nicht von Gas durchströmt. Auf diese Art und Weise kann der von einem Servoventil benötigte Bauraum sowie der elektrische Energie- bzw. Leistungsbedarf desselben drastisch reduziert werden.

### Bezugszeichenliste

- 10: Servoventil
- 11, 11': Ventilkörper
- 12, 12': Ventilsitz
- 13, 13': Federelement
- 14: Elektromagnet
- 15: Pfeil
- 16: Öffnung
- 17: Spulenwicklung
- 18: Spulenkasten
- 19: Hülse
- 20: Gehäuse
- 21: Gehäuseoberteil
- 22: Gehäuseunterteil
- 23: Gasdurchlassöffnung
- 24: Gasdurchlassöffnung
- 25: Gasdurchlassöffnung
- 26: Anschluss
- 27: Dichtung
- 28: Dichtung
- 29: Gehäuse
- 30: Servoventil
- 31: Servoventil
- 32: Servoventil
- 33: Betätigungselement
- 34: Betätigungselement
- 35: Federelement
- 36: Federelement
- 37: Pfeil
- 38: Pfeil
- 39: Strömungskanal
- 40: Strömungskanal
- 41: Hülse
- 42: Hülse

## Patentansprüche

1. Doppel-Servoventil (30) eines Gasregelgeräts, mit zwei Ventilkörpern (11, 11'), zwei Ventilsitzen (12, 12') und zwei Federelementen (13, 13'), deren Federkraft den jeweiligen Ventilkörper (11, 11') in eine Schließstellung gegen den jeweiligen Ventilsitz (12, 12') drückt, und mit einem als Elektromagnet (14) ausbildeten Aktuator, der in einem bestromten Zustand den jeweiligen Ventilkörper (11, 11') entgegen der vom jeweiligen Federelement (13, 13') bereitgestellten Federkraft vom jeweiligen Ventilsitz (12, 12') abhebt und in eine Öffnungsstellung überführt, wobei beide Ventile des Doppel-Servoventils (30) als Drei-Wege-Ventile ausgebildet sind, die jeweils Gasdurchtrittsöffnungen (24, 24') für einen Anschluss Normally Open (NO), Gasdurchtrittsöffnungen (23, 23') für einen Anschluss Normally Closed (NC) und Gasdurchtrittsöffnungen (25, 25') für einen Anschluss Common (C) aufweisen, **dadurch gekennzeichnet, dass**
der Elektromagnet (14) ringförmig ausgebildet ist und eine mittlere Öffnung (16) aufweist,
beide Ventilsitze (12, 12') innerhalb der Öffnung (16) des Elektromagneten (14) positioniert sind, wobei beide Ventilkörper (11, 11') und beide Federelemente (13, 13') in die Öffnung (16) des Elektromagneten (14) derart hineinragen, dass ein erster Ventilkörper (11) und ein mit demselben zusammenwirkendes erstes Federelement (13) von einer ersten Seite aus in die Öffnung (16) des Elektromagneten (14) hineinragen, und dass ein zweiter Ventilkörper (11') und ein mit demselben zusammenwirkendes zweites Federelement (13') von einer zweiten, gegenüberliegenden Seite aus in die Öffnung (16) des Elektromagneten (14) hineinragen,
Spulenwicklungen (17) des Elektromagneten (14) im Bereich der Öffnung (16) von einem gasdichten Spulenkasten (18) des Elektromagneten (14) gegenüber der Öffnung (16) gasdicht getrennt sind, wobei der Elektromagnet (14) außen von einem Gehäuse (20) aus einem weichmagnetischen Werkstoff umgeben ist, und wobei das Gehäuse (20) über Dichtungen (28) gegenüber einem Gehäuse (29) eines Gasregelgeräts abdichtbar ist, wobei dann, wenn die mittlere Öffnung (16) des Elektromagneten (14) von Gas durchströmt ist, die Spulenwicklungen (17) des Elektromagneten (14) von Gas nicht durchströmt sind.

2. Servoventil nach Anspruch 1, **dadurch gekennzeichnet, dass** mindestens eine Hülse (19, 19') aus einem weichmagnetischen Werkstoff in die Öffnung (16) des Elektromagneten (14) hineinragt bzw. in derselben positioniert ist, nämlich derart, dass jeder in die Öffnung (16) hineinragende bzw. in derselben positionierte Ventilkörper (11, 11') zumindest abschnittsweise außen von einer Hülse (19, 19') aus einem weichmagnetischen Werkstoff umgeben sind.

3. Servoventil nach einem der Anspruch 2, **dadurch gekennzeichnet, dass** sich die oder jede Hülse (19, 19) aus einem weichmagnetischen Werkstoff radial innen an den gasdichten, nicht magnetischen Spulenkasten (18) des Elektromagneten (14) anschließt.

4. Servoventil nach einem oder mehreren der Ansprüche 1 bis 3, **dadurch gekennzeichnet, dass** jeder in die Öffnung (16) hineinragende bzw. in derselben positionierte Ventilkörper (11, 11') aus einem weichmagnetischen Werkstoff gebildet ist.

5. Gasregelgerät mit einem Servoventil nach einem oder mehreren der Ansprüche 1 bis 4.

## Claims

1. Double servo valve (30) of a gas regulating device, with two valve bodies (11, 11'), two valve seats (12, 12') and two spring elements (13, 13'), the spring force of which presses the respective valve body (11, 11') into a closing position against the respective valve seat (12, 12'), and with an actuator which is designed as an electromagnet (14) which, in a live state, lifts the respective valve body (11, 11') from the respective valve seat (12, 12') counter to the spring force provided by the respective spring element (13, 13') and transfers the said valve body into an opening position, both valves of the double servo valve (30) being designed as three-way valves which have in each case gas passage ports (24, 24') for a normally open connection (NO), gas passage ports (23, 23') for a normally closed connection (NC) and gas passage ports (25, 25') for a common connection (C), **characterized in that**
the electromagnet (14) is of ring-shaped form and has a middle port (16),
the two valve seats (12, 12') are positioned inside the port (16) of the electromagnet (14), both valve bodies (11, 11') and both spring elements (13, 13') projecting into the port (16) of the electromagnet (14) in such a way that a first valve body (11) and a first spring element (13) cooperating therewith project with a first side into the port (16) of the electromagnet (14), and in such a way that a second valve body (11') and a second spring element (13') cooperating therewith project from a second, opposite side into the port (16) of the electromagnet (14),
coil windings (17) of the electromagnet (14) are separated, in the region of the port (16), from a gas-tight coil box (18) of the electromagnet (14) so as to be gas-tight with respect to the port (16), the electromagnet (14) being surrounded on the outside by a housing (20) made from a soft-magnetic material, and the housing (20) being capable of being sealed off via seals (28) with respect to a housing (29) of a gas regulating device, and, when gas flows through the middle port (16) of the electromagnet (14), no gas flowing through the coil windings (17) of the electromagnet (14).

2. Servo valve according to Claim 1, **characterized in that** at least one sleeve (19, 19') made from a soft-magnetic material projects into the port (16) of the electromagnet (14) or is positioned therein, to be precise in such a way that each valve body (11, 11') projecting into the port (16) or positioned therein is at least partially surrounded on the outside by a sleeve (19, 19') made from a soft-magnetic material.

3. Servo valve according to Claim 2, **characterized in that** the or each sleeve (19, 19') made from a soft-magnetic material is adjacent radially on the inside to the gas-tight non-magnetic coil blocks (18) of the electromagnet (14).

4. Servo valve according to one or more of Claims 1 to 3, **characterized in that** each valve body (11, 11') projecting into the port (16) or positioned therein is formed from a soft-magnetic material.

5. Gas regulating device having a servo valve according to one or more of Claims 1 to 4.

## Revendications

1. Servo-vanne (30) double pour appareil de régulation de gaz, présentant
deux corps de vanne (11, 11'), deux sièges de vanne (12, 12') et deux éléments à ressort (13, 13') dont la force élastique repousse chaque corps de vanne (11, 11') dans une position de fermeture contre le siège de vanne (12, 12') respectif et un actionneur configuré comme électroaimant (14) qui, lorsqu'il est alimenté en courant, relève chaque corps de vanne (11, 11') du siège de vanne (12, 12') respectif en opposition à la force élastique appliquée par chaque élément élastique (13, 13') et le transfère dans une position d'ouverture,
les deux vannes de la servo-vanne (30) double étant configurées comme vannes à trois voies qui présentent chacune une ouverture (24, 24') de passage de gaz pour un raccordement normalement ouvert (NO), une ouverture (23, 23') de passage de gaz pour un raccordement normalement fermé (NC) et une ouverture (25, 25') de passage de gaz pour un raccordement commun (C),
**caractérisée en ce que**
l'électroaimant (14) est configuré en anneau et présente une ouverture centrale (16),
les deux sièges de vanne (12, 12') sont disposés à l'intérieur de l'ouverture (16) de l'électroaimant (14), les deux corps de vanne (11, 11') et les deux éléments de ressort (13, 13') pénétrant dans l'ouverture (16) de l'électroaimant (14) de telle sorte qu'un premier corps de vanne (11) et un premier élément de ressort (13) qui coopère avec lui pénètrent par un premier côté dans l'ouverture (16) de l'électroaimant (14) et qu'un deuxième corps de vanne (11') et le deuxième élément de ressort (13') qui coopère avec lui pénètrent dans l'ouverture (16) de l'électroaimant (14) par un deuxième côté opposé au premier,
**en ce qu'**au niveau de l'ouverture (16), les enroulements de bobine (17) de l'électroaimant (14) sont séparés de manière étanche aux gaz de l'ouverture (16) par un boîtier de bobine (18) étanche aux gaz de l'électroaimant (14), l'électroaimant (14) étant entouré à l'extérieur par un boîtier (20) en matériau magnétique doux, le boîtier (20) pouvant être séparé hermétiquement d'un boîtier (29) d'un appareil de régulation de gaz par des joints d'étanchéité (28) et
**en ce que** lorsque l'ouverture centrale (16) de l'électroaimant (14) est traversée par les gaz, les enroulements de bobine (17) de l'électroaimant (14) ne sont pas traversés par le gaz.

2. Servo-vanne selon la revendication 1, **caractérisée en ce qu'**au moins une douille (19, 19') en matériau magnétique doux s'enfonce dans l'ouverture (16) de l'électroaimant (14) ou est placée dans cette dernière de telle sorte que chaque corps de vanne (11, 11') qui pénètre dans l'ouverture (16) ou qui y est placé soit entouré à l'extérieur et au moins en partie par une douille (19, 19') en matériau magnétique doux.

3. Servo-vanne selon la revendication 2, **caractérisée en ce que** la ou les douilles (19, 19') en matériau magnétique doux se raccordent radialement du côté intérieur au boîtier de bobine (18) étanche aux gaz et non magnétique de l'électroaimant (14).

4. Servo-vanne selon l'une ou plusieurs des revendications 1 à 3, **caractérisée en ce que** chaque corps de vanne (11, 11') s'enfonçant dans l'ouverture (16) ou disposé dans cette dernière est réalisé en matériau magnétique doux.

5. Appareil de régulation de gaz doté d'une servo-vanne selon l'une ou plusieurs des revendications 1 à 4.
